# EUROPÄISCHE PATENTSCHRIFT

(11) **EP 1 900 616 B1**
(45) Veröffentlichungstag und Bekanntmachung des Hinweises auf die Patenterteilung: **29.06.2011**
(21) Anmeldenummer: 07017445.3
(22) Anmeldetag: 06.09.2007
(51) Int. Cl.: B62D 33/06

(54) **Fahrerhauslagerung**
Suspension for a driver's cabin
Suspension de la cabine conducteur

(30) Priorität: 15.09.2006 DE 102006044150
(43) Veröffentlichungstag der Anmeldung: 19.03.2008
(73) Patentinhaber: ThyssenKrupp Automotive Systems GmbH, 45145 Essen (DE)
(72) Erfinder: Scholz, Christian, Dipl.-Ing., 44149 Dortmund (DE); Schulze-Bergkamen, Burkhard, Dipl.-Ing., 44287 Dortmund (DE)
(74) Vertreter: Adams, Steffen

(56) Entgegenhaltungen:
- EP-A- 0 943 532
- DE-A1- 19 723 440
- JP-U- 61 157 070

## Beschreibung

Die Erfindung betrifft eine Fahrerhauslagerung für Nutzfahrzeuge gemäß dem Oberbegriff des Patentanspruchs 1.

Eine derartige Fahrerhauslagerung ist aus dem Stand der Technik (DE 101 13 798 A1) bekannt. Bei dieser bekannten Fahrerhauslagerung soll die bewegliche und elastische Aufhängung des Fahrerhauses Verwindungen des Rahmens und Schwingungen vom Fahrerhaus fernhalten und den Komfort der Insassen erhöhen. Hierzu sollen Rollbewegungen (Drehung um die Fahrzeuglängsachse) des Fahrerhauses, vor allem bei Kurvenfahrten, verhindert werden. Um derartige Rollbewegungen zu verhindern, sollte der Schwerpunkt des Fahrerhauses im so genannten Rollzentrum liegen. Um dies zu erreichen, schlägt die DE 101 13 798 A1 vor, dass auf beiden Seiten je ein Längslenker und ein Schräglenker vorgesehen sind, die mit einem Ende am Träger des Fahrerhauses und mit dem anderen Ende an rahmenfesten Lagern angelenkt sind, dass der Träger des Fahrerhauses beiderseits je ein erstes Anlenklager für den Längslenker und je ein zweites Anlenklager für den Schräglenker besitzt, wobei die beiden Anlenklager jeweils in verschiedener Höhe und in verschiedenem Abstand von der Längsmitte des Fahrzeuges angeordnet sind, und dass am Rahmen des Fahrzeuges beiderseits je ein einziges rahmenfestes Lager für das eine Ende des Längslenkers und für das eine Ende des Schräglenkers vorgesehen ist. Durch diese Konstruktion gelingt es, das Rollzentrum deutlich nach oben zu verschieben, so dass es in der Nähe des Schwerpunktes des Fahrerhauses angeordnet ist.

Die in der DE 101 13 798 A1 vorgeschlagenen Maßnahmen beschränken sich auf die vorderen Fahrerhauslagerungseinrichtungen und beschäftigen sich lediglich mit dem Einfluss, den die Geometrie der vorderen Fahrerhauslagerungen auf die Lage des Rollzentrums im Verhältnis zum Schwerpunkt des Fahrerhauses hat. Nachteilig ist dabei, dass der Fahrkomfort durch diese Maßnahmen zwar verbessert wird, jedoch ist der erreichte Fahrkomfort weiter verbesserungsfähig. Nachtellig ist weiter, dass eine mehrere Einzellenker umfassende Lenkeranordnung vorgesehen ist, was den Fertigungs- und Montageaufwand erhöht.

In der EP 0 943 532 A2 wird eine Lagerung für ein Fahrerhaus beschrieben, bei der eine vordere und eine hintere Lagereinrichtung vorhanden sind Sowohl die vordere als auch die hintere Lagereinrichtung weist einen Schwenkhebel auf. Über die Schwenkhebel ist das Fahrerhaus mit dem Fahrzeugchassis verbunden. Die beiden Schwenkhebel bilden eine Parallelogramm-Gelenkverbindung aus. Mit dieser Anordnung soll ein Aufschlagen des Fahrerhauses verhindert und Vibrationsbewegungen in Vorwärts- und Rückwärtsrichtung sollen reduziert werden. Eine gezielte Verlagerung der Wankachse und der Nickachse der Fahrerhauskabine mit dem Ziel, dass diese Achsen in der Nähe des Kabinenschwerpunktes verlaufen, ist mit der aus der EP 0043 532 A2 bekannten Anordnung nicht möglich.

Der Erfindung liegt die Aufgabe zugrunde, eine Fahrerhauslagerung mit den Merkmalen des Oberbegriffes des Patentanspruchs 1 derart weiterzubilden, dass der Fahrkomfort in der Fahrerhauskabine bei geringem Fertigungs- und Montageaufwand weiter verbessert wird. Diese Aufgabe wird erfindungsgemäß durch eine Fahrerhauslagerung mit den Merkmalen des Patentanspruchs 1 gelöst. Vorteilhafte Ausgestaltungen der erfindungsgemäßen Fahrerhauslagerung sind in den Unteransprüchen angegeben.

Die Erfindung geht von der Erkenntnis aus, dass durch kinematische und konstruktive Änderungen der Lagereinrichtungen von Fahrerhauslagerungen die Lage der Wankachse und der Nickachse einer Fahrerhauskabine gezielt verlagert werden kann, indem ein erstes, den vorderen Lagereinrichtungen der Fahrerhauslagerung zugeordnetes Rollzentrum und ein zweites, der hinteren Lagereinrichtung der Fahrerhauslagerung zugeordnetes Rollzentrum gezielt verlagert und dadurch so positioniert werden können, dass die Wankachse und die Nickachse in der Nähe des Kabinenschwerpunktes verlaufen. Durch diese Maßnahme wird der vom Schwerpunkt der Fahrerhauskabine aus bestehende jeweilige Hebelarm zu der Wankachse bzw. der Nickachse des Fahrerhauses minimiert, so dass die rotatorischen Bewegungen der Kabine minimiert werden. Derartige rotatorische Bewegungen der Kabine treten insbesondere bei Schaltvorgängen, beim Anfahren und beim Bremsen sowie auch bei unebener Straße und Kurvenfahrt auf. Erfindungsgemäß wurde erkannt, dass diese unerwünschten rotatorischen Bewegungen durch die gezielte, aufeinander abgestimmte Ausrichtung der vorderen Lagereinheiten und der mindestens einen hinteren Lagereinheit der Fahrerhauslagerung verringert bzw. minimiert werden können.

Erfindungsgemäß weisen die vorderen Lagereinrichtungen der Fahrerhauslagerung je zwei räumlich angestellte Dreipunktlenker auf. Diese Dreipunkt-Lenker können insbesondere als Dreipunkt-Schräglenker ausgebildet sein. Je nach gewünschter Kinematik können die Dreipunkt-Schräglenker im Extremfall auch als räumlich angestellte Längslenker oder auch als räumlich angestellte Querlenker ausgeführt sein. Um die Wankachse und die Nickachse signifikant nach den Bedürfnissen der Kinematik auslegen zu können, ist es gemäß einer der vorliegenden Erfindung zugrunde liegenden Erkenntnis erforderlich, neben den vorderen Lagereinrichtungen der Fahrerhauslagerung auch die hintere Lagereinrichtung der Fahrerhauslagerung zu betrachten und mit in die Konstruktion einzubeziehen, indem die hintere und die vorderen Lagereinrichtungen aufeinander abgestimmt werden. Erfindungsgemäß ist bei der hinteren Lagereinrichtung ebenso wie bei den vorderen Lagereinrichtungen der Einsatz räumlich angeordneter Dreipunktlenker, insbesondere Dreipunkt-Schräglenker vorgesehen.

Zusätzlich kann bei der hinteren Lagereinrichtung der Kabinenanbindungspunkt einen Schlosszapfen aufweisen, der in das Schloss einer Domanbindung des Fahrerhauses einführbar und mit diesem verriegelbar ist. Auf diese Weise können die aufgrund der erfindungsgemäß ausgebildeten Kinematik entstehenden Kräfte in Längs-, Quer- und Vertikalrichtung aufgenommen werden. Gleichzeitig wird es dadurch ermöglicht, das Fahrerhaus in Fahrtrichtung gesehen nach vorne abkippen zu können. Dies ist beispielsweise erforderlich, um Wartungs- und Reparaturarbeiten am Motor vornehmen zu können.

Durch die erfindungsgemäße räumliche Anordnung der Lenker der vorderen und hinteren Lagereinrichtungen lassen sich sowohl die Wankachse als auch die Nickachse korrespondierend zur räumlichen Anordnung frei verschieben und optimal auf die Anforderungen ausrichten. Dadurch wird eine große Steigerung des Fahrkomforts bei einem ausgewogenen Kosten-Nutzenverhältnis erreicht, ohne dass ein aufwändiges und kostenintensives aktives System erforderlich ist.

Im Folgenden wird die Erfindung anhand eines Ausführungsbeispiels näher erläutert. Im Einzelnen zeigen
- Figur 1: eine erfindungsgemäße Fahrerhauslagerung mit vorderen und hinteren Lagereinrichtungen in einer perspektivischen Darstellung,
- Figur 2a: die Fahrerhauslagerung gemäß Figur 1 in einer Ansicht von hinten in Fahrtrichtung,
- Fig. 2b: eine Fahrerhauslagerung in einer Ansicht in Fahrtrichtung in einer gegenüber Figur 2a abgewandelten Ausführungsform,
- Figur 3: die erfindungsgemäße Fahrerhauslagerung gemäß Figur 2a in einer Seitenansicht,
- Figur 4: die Fahrerhauslagerung gemäß Figur 2b in einer Seitenansicht.

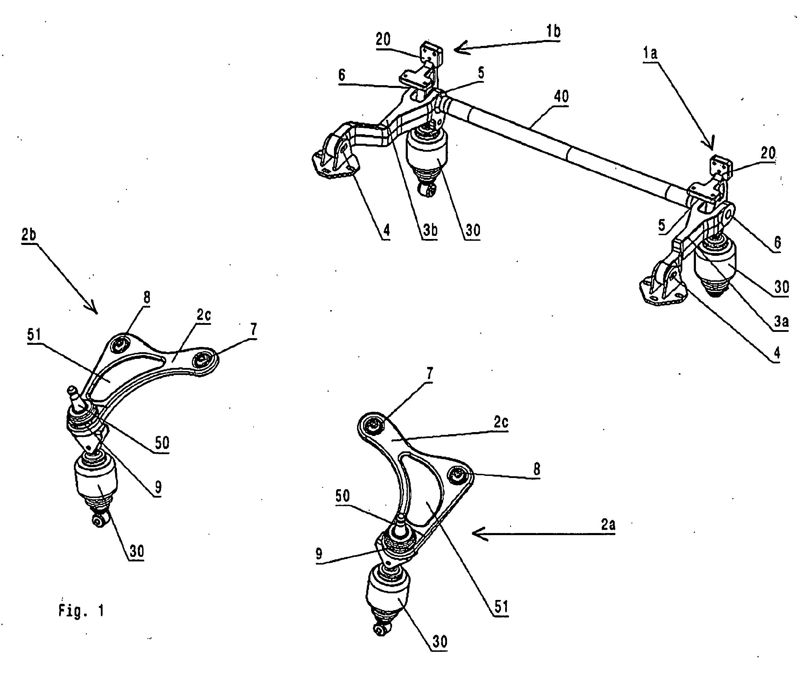

In Figur 1 ist die erfindungsgemäße Fahrerhauslagerung in einer perspektivischen Ansicht dargestellt. Um die Klarheit der zeichnerischen Darstellung zu erhöhen, wurden alle Bauteile der Fahrerhauskabine und des Fahrzeugrahmens bzw. sonstigen Fahrzeugaufbaus nicht dargestellt.

Die in Figur 1 dargestellte Fahrerhauslagerung weist zwei vordere Lagereinrichtungen 1 a, 1b auf. Jede der vorderen Lagereinrichtungen 1 a, 1b weist eine Dreipunktlenkeranordnung 3a, 3b auf. Im dargestellten Ausführungsbeispiel ist die Dreipunktlenkeranordnung 3a, 3b jeweils als Dreieckslenker ausgebildet. Dieser kann als einschaliges Blechpressteil oder auch als mehrschaliges Profilbauteil ausgebildet sein.

An dem in Fahrtrichtung gesehen hinten liegenden Ende des Dreipunktlenkers 3a, 3b ist jeweils ein Rahmenanbindungspunkt 4 für die Anbindung des Dreipunktlenkers 3a, 3b an den nicht dargestellten Fahrzeugaufbau angeordnet. An dem Rahmenanbindungspunkt 4 ist ein Rahmenanbindungselement vorgesehen. Dieses ist als anschraubbare Platte mit Befestigungslaschen ausgebildet. An dem in Fahrtrichtung gesehen vorderen Ende der Dreieckslenker 3a, 3b sind Kabinenanbindungspunkte 5, 6 angeordnet. Bei dem in Figur 1 dargestellten Ausführungsbeispiel befinden sich die beiden Kabinenanbindungspunkte jedes Dreieckslenkers 3a, 3b auf demselben räumlichen Niveau. Auf dem jeweiligen Dreieckslenker 3a, 3b sind weiter Befestigungselemente 20 angeordnet, welche mit der Fahrerhauskabine verbindbar sind.

Unter dem jeweiligen Dreiecklenker 3a, 3b ist jeweils ein Feder-Dämpfer-Element 30 angeordnet. Diese Feder-Dämpfer-Elemente stützen sich mit ihrem den Dreieckslenkern 3a, 3b abgewandten Ende auf dem Fahrzeugaufbau, z. B. auf dem Fahrzeugrahmen ab.

Die beiden vorderen Lagereinrichtungen sind über einen Stabilisator 40 miteinander verbunden.

In der räumlichen Darstellung der Figur 1 ist zu erkennen, dass bei jedem Dreieckslenker 3a, 3b der Rahmenanbindungspunkt 4 auf einem höheren räumlichen Niveau angeordnet ist, als die Kabinenanbindungspunkte 5, 6. Weiterhin ist zu erkennen, dass der jeweilige Kabinenanbindungspunkt 5 näher an der Mittellinie des Fahrzeugs angeordnet ist, als der jeweilige Kabinenanbindungspunkt 6. Von der Fahrzeugmittellinie aus gesehen, kann man auch davon sprechen, dass der Kabinenanbindungspunkt 5 ein innerer Kabinenanbindungspunkt und der Kabinenanbindungspunkt 6 ein äußerer Kabinenanbindungspunkt ist.

Gemäß der Erfindung muss zumindest sichergestellt sein, dass der Rahmenanbindungspunkt 4 eines Dreieckslenkers 3a, 3b räumlich gesehen auf einem höheren Niveau angeordnet ist als die beiden Kabinenanbindungspunkte 5, 6.

Zusätzlich kann der jeweilige Dreieckslenker 3a, 3b auch so ausgebildet sein, dass der erste (innere) Kabinenanbindungspunkt 5 auf einem höheren Niveau angeordnet ist, als der zweite (äußere) Kabinenanbindungspunkt 6. Diese Ausführungsform der Erfindung ist jedoch in Figur 1 nicht dargestellt.

Bei dem in Figur 1 dargestellten Ausführungsbeispiel sind zwei hintere Lagereinrichtungen 2a, 2b vorgesehen. Jede hintere Lagereinrichtung 2a, 2b umfasst eine Dreipunktlenkeranordnung 2c. Im dargestellten Ausführungsbeispiel ist die Dreipunktlenkeranordnung 2c als Dreieckslenker in Blechschalenbauweise ausgeführt. Es kann sich dabei um eine einschalige Bauweise in Form eines Blechpressteils handeln. Ebenso kann es sich um eine zweischalige oder sogar mehrschalige Bauweise handeln, bei der der Dreieckslenker aus mehreren Profilen bzw. Blechpressteilen zusammengesetzt ist.

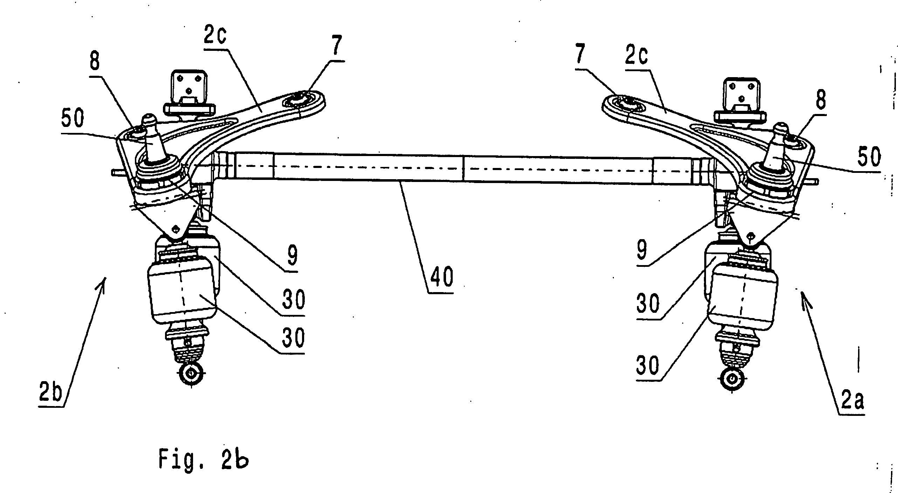

Der Dreieckslenker 2c weist einen ersten 7 und einen zweiten Rahmenanbindungspunkt 8 für die Anbindung des Dreieckslenkers 2c an den Fahrzeugaufbau auf. Dabei ist der Dreieckslenker so angeordnet, dass der Rahmenanbindungspunkt 7 näher an der Fahrzeugmittellinie angeordnet ist als der Rahmenanbindungspunkt 8. Erfindungsgemäß ist der Dreieckslenker 2c so ausgerichtet, dass die Rahmenanbindungspunkte 7, 8 auf einem höheren räumlichen Niveau angeordnet sind als der Kabinenanbindungspunkt 9. Besonders vorteilhaft ist es, wenn dabei gleichzeitig auch der von der Fahrzeugmitte aus gesehen innen liegende, d. h. näher an der Fahrzeugmittellinie liegende Rahmenanbindungspunkt 7 auf einem höheren Niveau angeordnet ist als der äußere Rahmenanbindungspunkt 8. Diese Ausführungsform der Erfindung ist in Figur 2b dargestellt und wird weiter unten näher beschrieben.

An dem in Fahrtrichtung gesehen hinteren Ende jedes Dreieckslenkers 2c ist ein Kabinenanbindungspunkt 9 angeordnet. An dem Kabinenanbindungspunkt 9 ist ein Schlosszapfen 50 vorgesehen, welcher zur Verbindung des Dreieckslenkers 2c mit dem Fahrerhaus dient. Das Fahrerhaus weist dann eine Domanbindung mit einem Schloss auf, in welches der Schlosszapfen 50 einführbar ist und in welchem der Schlosszapfen verriegelt werden kann.

Um Gewicht zu sparen, weist der Dreieckslenker 2c jeder hinteren Lagereinrichtung 2a, 2b eine etwa sichelförmige Ausnehmung 51 auf. Unterhalb des Kabinenanbindungspunktes 9 ist eine Feder-Dämpfer-Einrichtung 30 vorgesehen, die sich mit ihrem dem Kabinenanbindungspunkt 9 abgewandten Ende an dem Fahrzeugaufbau abstützt.

Durch die in Figur 1 dargestellte Kombination der Ausrichtung der vorderen Dreipunktlenkeranordnung 3a und 3b und der hinteren Dreipunktlenkeranordnung 2c im Raum wird eine Verlagerung des hinteren und des vorderen Rollzentrums in Richtung Schwerpunkt der Fahrerhauskabine erreicht. Dadurch verläuft sowohl die Wankachse als auch die Nickachse der Fahrerhauskabine in der Nähe des Fahrerhauskabinenschwerpunktes. Dadurch wird ein besonders geringer Abstand zwischen dem Fahrerhauskabinenschwerpunkt einerseits und der Wankachse und der Nickachse andererseits erreicht, so dass die den Fahrkomfort negativ beeinflussenden rotatorischen Bewegungen um die Wankachse und die Nickachse auf ein Minimum reduziert werden. Im Idealfall kann es sogar erreicht werden, dass die Wankachse und die Nickachse durch den Fahrerhauskabinenschwerpunkt verläuft, so dass der Hebelarm für die unerwünschten rotatorischen Bewegungen gleich Null wird und diese somit entfallen.

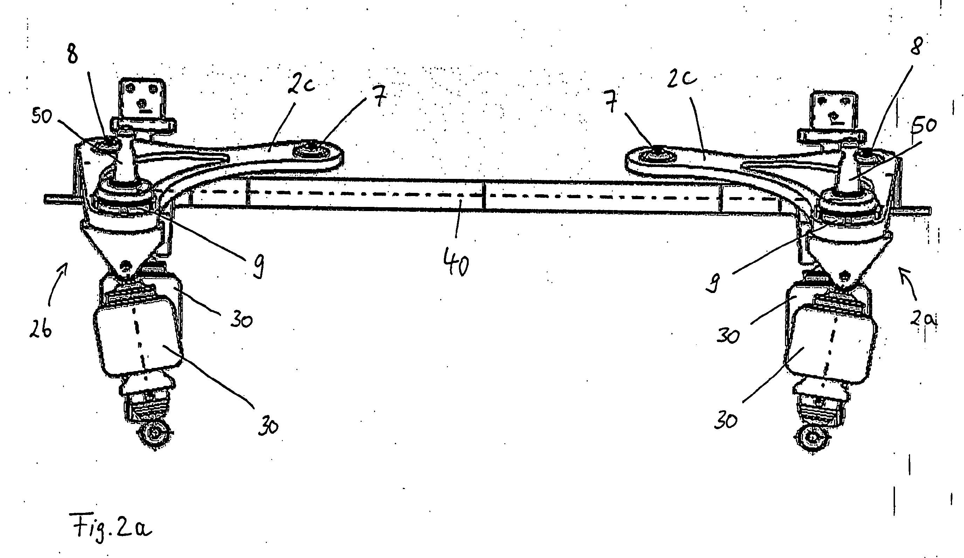

In Figur 2a ist die Fahrerhauslagerung gemäß Figur 1 in einer Ansicht in Fahrtrichtung dargestellt. Gut zu erkennen sind die schräg zur Fahrzeugmitte hin ansteigend ausgerichteten Dreieckslenker 2c der hinteren Lagereinrichtungen 2a, 2b. Die von der Fahrzeugmitte aus gesehen innen liegenden Rahmenanbindungspunkte 7 der Dreieckslenker 2c sind auf dem gleichen räumlichen Niveau angeordnet wie die äußeren Rahmenanbindungspunkte 8. Gut zu erkennen ist auch der in Fahrtrichtung gesehen hintere Kabinenanbindungspunkt 9 des Dreieckslenkers 2c. Dieser trägt einen Schlosszapfen 50 zur Verbindung des Dreieckslenkers 2c mit dem Fahrerhaus. Es ist ebenfalls zu erkennen, dass sich der Kabinenanbindungspunkt 9 jedes Dreieckslenkers 2c auf einem niedrigeren räumlichen Niveau befindet als die Rahmenanbindungspunkte 7, 8 des Dreieckslenkers 2c.

In Figur 2a sind ebenfalls die in Fahrtrichtung gesehen hintereinander angeordneten Feder-Dämpfer-Einheiten 30 zu erkennen, sowie der die vorderen Lagereinrichtungen miteinander verbindende Stabilisator 40. Die vorderen Lagereinrichtungen 1a, 1b sind in der Darstellung in Figur 2a größtenteils von den hinteren Lagereinrichtungen 2a, 2b verdeckt.

In Figur 2b ist eine gegenüber Figur 2a abgewandelte Ausführungsform der Erfindung dargestellt. Die in Figur 2b dargestellte Ansicht von hinten in Fahrtrichtung ist dieselbe Ansicht, die in Figur 2a dargestellt ist. Im Unterschied zu Figur 2a sind bei der in Figur 2b dargestellten Ausführungsform bei beiden hinteren Lagereinrichtungen 2a, 2b die fahrzeuginneren, d.h. die näher zur Fahrzeugmitte hin angeordneten Rahmenanbindungspunkte 7 auf einem räumlich höheren Niveau angeordnet als die fahrzeugäußeren, d.h. weiter von der Fahrzeugmitte weg angeordneten Rahmenanbindungspunkte 8. Zusätzlich zu der schrägen Anstellung des Dreieckslenkers 2c in Fahrtrichtung, durch die die jeweiligen Rahmenanbindungspunkte 7, 8 auf einem höheren räumlichen Niveau angeordnet sind als die jeweiligen Kabinenanbindungspunkte 9, sind die Dreieckslenker 2c auch quer zur Fahrtrichtung schräg angeordnet, so dass jeweils der fahrzeuginnere Rahmenanbindungspunkt 7 auf einem höheren Niveau im Raum angeordnet ist als der jeweilige fahrzeugäußere Rahmenanbindungspunkt 8. Durch diese zusätzliche schräge Anstellung der Dreieckslenker 2c wird eine weitere gezielte Verlagerung des hinteren Rollzentrums erreicht. Durch die doppelt schräge Anstellung des Dreieckslenkers kann die Lage des hinteren Rollzentrums im Raum somit besonders gut beeinflusst werden.

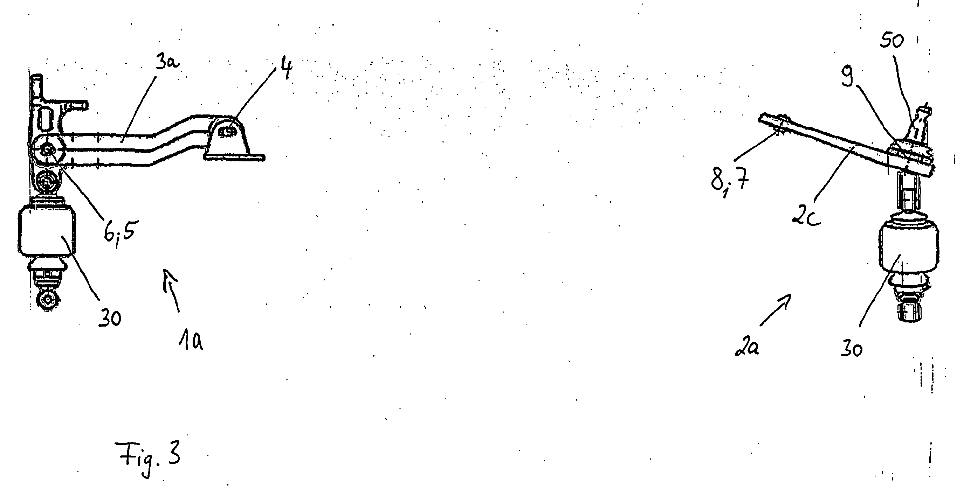

In Figur 3 ist die erfindungsgemäße Fahrerhauslagerung gemäß Fig. 2a in der Seitenansicht dargestellt. Einer besseren Übersichtlichkeit wegen ist nur die jeweils vordere und hintere Lagereinrichtung einer Fahrzeughälfte dargestellt. Zu erkennen ist jeweils eine vordere Lagereinrichtung 1 a und eine hintere Lagereinrichtung 2a. In dieser Seitenansicht ist besonders gut zu erkennen, dass der Rahmenanbindungspunkt 4 der vorderen Lagereinrichtung 1 a räumlich auf einem höheren Niveau angeordnet ist als die in Figur 3 hintereinander liegenden Kabinenanbindungspunkte 5, 6. Dies wird durch eine entsprechende Ausformung des Dreipunktlenkers 3a erreicht. Dieser weist eine Kröpfung auf, durch die der Rahmenanbindungspunkt 4 auf ein höheres Niveau gebracht wird als die Kabinenanbindungspunkte 5, 6.

Die hintere Lagereinrichtung 2 weist einen Dreieckslenker 2c auf, bei dem die Rahmenanbindungspunkte 7, 8 quer zur Fahrtrichtung gesehen auf demselben Höhenniveau angeordnet sind. Dagegen sind die Rahmenanbindungspunkte 7, 8 auf einem räumlich höheren Niveau angeordnet als der Kabinenanbindungspunkt 9 des Dreieckslenkers 2c. Dies wird durch eine entsprechende Anstellung des Dreieckslenkers 2c gegenüber der Horizontalen erreicht.

Unter dem Kabinenanbindungspunkt 9 des Dreieckslenkers 2c ist wiederum die Feder-Dämpfer-Einheit 30 angeordnet. Analog ist die Feder-Dämpfer-Einheit 30 bei der vorderen Lagereinrichtung 1a unter den Kabinenanbindungspunkten 5, 6 angeordnet.

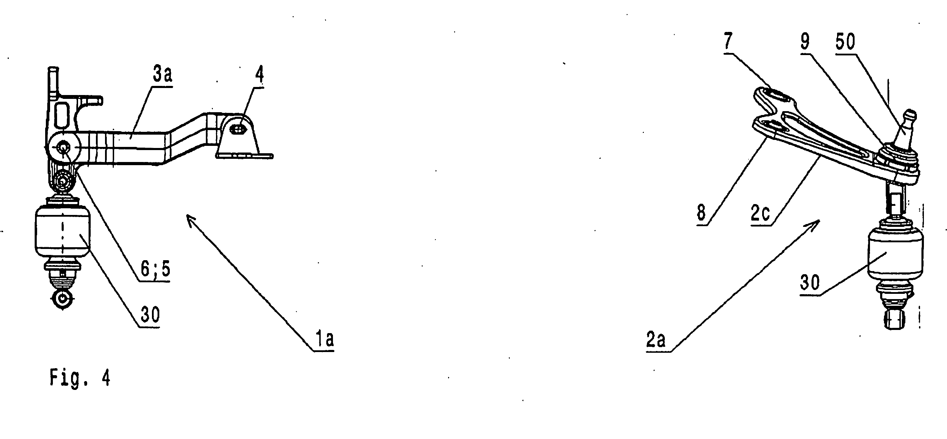

Figur 4 zeigt die Ausführungsform der Erfindung gemäß Figur 2b in einer Seitenansicht quer zur Fahrtrichtung. Analog zu Figur 3 sind nur die vorderen Lagereinrichtung 1 a und die hintere Lagereinrichtung 2a einer Fahrzeughälfte dargestellt, um eine bessere Übersichtlichkeit zu erreichen. In dieser Darstellung ist die doppelt schräge Anstellung des Dreieckslenkers 2c einerseits in Fahrtrichtung und andererseits quer zur Fahrtrichtung besonders gut zu erkennen. Einerseits befinden sich die jeweiligen Rahmenanbindungspunkte 7, 8 auf einem höheren Niveau im Raum als die jeweiligen Kabinenanbindungspunkte 9, und gleichzeitig befindet sich andererseits der näher zur Fahrzeugmitte hin angeordnete Rahmenanbindungspunkt 7 auf einem höheren Niveau im Raum als der jeweilige, weiter von der Fahrzeugmitte weg angeordnete Rahmenanbindungspunkt 8.

### Bezugszeichenliste

- 1 a: vordere Lagereinrichtung
- 1 b: vordere Lagereinrichtung
- 2, 2a: hintere Lagereinrichtung
- 2c: Dreipunkt-Lenkeranordnung; Dreieckslenker
- 3a, 3b: Dreipunkt-Lenkeranordnung; Dreieckslenker
- 4: Rahmenanbindungspunkt
- 5: Kabinenanbindungspunkt
- 6: Kabinenanbindungspunkt
- 7: Rahmenanbindungspunkt
- 8: Rahmenanbindungspunkt
- 9: Kabinenanbindungspunkt
- 20: Befestigungselement
- 30: Feder-Dämpfer-Einheit
- 40: Stabilisator
- 50: Schlosszapfen
- 51: Ausnehmung

## Patentansprüche

1. Fahrerhauslagerung für Nutzfahrzeuge, umfassend
a) in Fahrtrichtung gesehen zwei vordere Lagereinrichtungen (1 a, 1 b) und mindestens eine hintere Lagereinrichtung (2).
b) jede vordere Lagereinrichtung weist eine Dreipunkt-Lenkeranordnung (3a, 3b), einen Rahmenanbindungspunkt (4) für die Anbindung der Dreipunkt-Lenkeranordnung (3a, 3b) an den Fahrzeugaufbau und einen ersten (5) und einen zweiten Kabinenanbindungspunkt (6) für die Anbindung der Dreipunkt-Lenkeranordnung an die Fahrerhauskabine auf, wobei der erste Kabinenanbindungspunkt (5) näher an der Fahrzeugmittellinie angeordnet ist als der zweite Kabinenanbindungspunkt (6), wobei
c) die mindestens eine hintere Lagereinrichtung (2) eine Dreipunkt-Lenkeranordnung (2c), einen ersten (7) und einen zweiten Rahmenanbindungspunkt (8) für die Anbindung der Dreipunkt-Lenkeranordnung (2c) an den Fahrzeugaufbau und einen Kabinenanbindungspunkt (9) für die Anbindung der Dreipunkt-Lenkeranordnung an die Fahrerhauskabine aufweist, wobei der erste Rahmenanbindungspunkt (7) näher an der Fahrzeugmittellinie angeordnet ist als der zweite Rahmenanbindungspunkt, wobei
d) die Dreipunkt-Lenkeranordnung (2c) der hinteren Lagereinrichtung (2) so ausgerichtet ist, dass der erste Rahmenanbindungspunkt (7) und der zweite Rahmenanbindungspunkt (8) auf einem höheren Niveau angeordnet sind als der Kabinenanbindungspunkt (9), **dadurch gekennzeichnet, dass**
e) die Dreipunkt-Lenkeranordnungen (3a, 3b) der vorderen Lagereinrichtungen (1a, 1b) jeweils so ausgerichtet sind, dass der Rahmenarbindungspunkt (4) in Fahrtrichtung gesehen näher zu der hinteren Lagereinrichtung (2) angeordnet ist als die Kabinenanbindungspunkte (5, 6) und auf einem höheren Niveau angeordnet ist als die Kabinenanbindungspunkte (5, 6), wobei die Kabinenanbindungspunkte (5, 6) der vorderen Lagereinrichtungen (1a, 1b) in Fahrtrichtung gesehen am vorderen Ende der Dreipunkt-Lenkeranordnungen (3a, 3b) angeordnet sind.

2. Fahrerhauslagerung nach Anspruch 1, **dadurch gekennzeichnet, dass** die Dreipunkt-Lenkeranordnungen (3a, 3b) der vorderen Lagereinrichtungen (1a, 1b) jeweils so ausgerichtet sind, dass der erste Kabinenanbindungspunkt (5) auf einem höheren Niveau angeordnet ist als der zweite Kabinenanbindungspunkt (6).

3. Fahrerhauslagerung nach Anspruch 1 oder 2, **dadurch gekennzeichnet, dass** die Dreipunkt-Lenkeranordnung (2c) so ausgerichtet ist, dass der erste Rahmenanbindungspunkt (7) auf einem höheren Niveau angeordnet ist als der zweite Rahmenanbindungspunkt (8).

4. Fahrerhauslagerung nach einem der vorhergehenden Ansprüche, **dadurch gekennzeichnet, dass** zwei gleich aufgebaute hintere Lagereinrichtungen (2a, 2b) vorgesehen sind.

## Claims

1. Driver's cab mounting for commercial vehicles, comprising
a) as seen in the direction of travel, two front bearing devices (1a, 1b) and at least one rear bearing device (2),
b) each front bearing device comprises a three-point steering arrangement (3a, 3b), a frame connection point (4) for connecting the three-point steering arrangement (3a, 3b) to the vehicle body, and a first cabin connection point (5) and a second cabin connection point (6) for connecting the three-point steering arrangement to the driver's cabin, wherein the first cabin connection point (5) is disposed in closer proximity to the vehicle centre line than the second cabin connection pint (6), wherein
c) the at least one rear bearing device (2) comprises a three-point steering arrangement (2c), a first frame connection point (7) and a second frame connection point (8) for connecting the three-point steering arrangement (2c) to the vehicle body, and a cabin connection point (9) for connecting the three-point steering arrangement to the driver's cabin, wherein the first frame connection point (7) is disposed in closer proximity to the vehicle centre line than the second frame connection point, wherein
d) the three-point steering arrangement (2c) of the rear bearing device (2) is aligned in such a manner that the first frame connection point (7) and the second frame connection point (8) are disposed at a higher level than the cabin connection point (9), **characterised in that**
e) the three-point steering arrangements (3a, 3b) of the front bearing devices (1a, 1b) are each aligned in such a manner that as seen in the direction of travel the frame connection point (4) is disposed in closer proximity to the rear bearing device (2) than the cabin connection points (5, 6) and is disposed at a higher level than the cabin connection points (5, 6), wherein as seen in the direction of travel, the cabin connection points (5, 6) of the front bearing devices (1a, 1b) are disposed on the front end of the three-point steering arrangements (3a, 3b).

2. Driver's cab mounting as claimed in clam 1, **characterised in that** the three-point steering arrangements (3a, 3b) of the front bearing devices (1a, 1b) are each aligned in such a manner that the first cabin connection point (5) is disposed at a higher level than the second cabin connection point (6).

3. Driver's cab mounting as claimed in claim 1 or 2, **characterised in that** the three-point steering arrangement (2c) is aligned in such a manner that the first frame connection point (7) is disposed at a higher level than the second frame connection point (8).

4. Driver's cab mounting as claimed in any one of the preceding claims, **characterised in that** two identically constructed rear bearing devices (2a, 2b) are provided.

## Revendications

1. Suspension de cabine conducteur pour véhicule utilitaire,
a) qui, vue dans le sens de marche, est dotée de deux dispositifs de support avant (1a, 1b) et d'au moins un dispositif de support arrière (2), sachant que
b) chaque dispositif de support avant présente un système de direction à trois points (3a, 3b), un point de raccordement au châssis (4) pour le raccordement du système de direction à trois points (3a, 3b) à la structure du véhicule automobile, ainsi qu'un premier point (5) et un deuxième point (6) de raccordement à la cabine pour le raccordement du système de direction à trois points à la cabine conducteur, sachant que le premier point de raccordement à la cabine (5) est plus proche de la ligne médiane du véhicule automobile que le deuxième point de raccordement à la cabine (6),
c) le dispositif de support arrière (2), au moins prévu, présente un système de direction à trois points (2c), un premier point (7) et un deuxième point (8) de raccordement au châssis pour le raccordement du système de direction à trois points (2c) à la structure du véhicule automobile, et un point de raccordement à la cabine (9) pour le raccordement à la cabine conducteur, sachant que le premier point de raccordement au châssis (7) est plus proche de la ligne médiane du véhicule automobile que le deuxième point de raccordement au châssis,
d) le système de direction à trois points (2c) du dispositif de support arrière (2) est disposé de sorte que le premier point (7) et le deuxième point (8) de raccordement au châssis soient situés à un niveau plus élevé que le point de raccordement à la cabine (9),
**caractérisée en ce que**
e) les systèmes de direction à trois points (3a, 3b) des dispositifs de support avant (1a, 1b) sont disposés, chacun, de sorte que le point de raccordement au châssis (4), vu dans le sens de marche, soit plus proche du dispositif de support arrière (2) que les points de raccordement à la cabine (5, 6) et situé à un niveau plus élevé que les points de raccordement à la cabine (5, 6), lesdits points de raccordement à la cabine (5, 6) des dispositifs de support avant (1a, 1b), vus dans le sens de marche, étant situés à l'extrémité avant des systèmes de direction à trois points (3a, 3b).

2. Suspension de cabine conducteur selon la revendication 1, **caractérisée en ce que** les systèmes de direction à trois points (3a, 3b) des dispositifs de support avant (1a, 1b) sont disposés, chacun, de sorte que le premier point de raccordement à la cabine (5) soit situé à un niveau plus élevé que le deuxième point de raccordement à la cabine (6)

3. Suspension de cabine de conducteur selon revendication 1 ou 2, **caractérisée en ce que** le système de direction à trois points (2c) est disposé de sorte que le premier point de raccordement au châssis (7) soit situé à un niveau plus élevé que le deuxième point de raccordement au châssis (8).

4. Suspension de cabine de conducteur selon l'une des revendications précédentes, **caractérisée en ce que** deux dispositifs de support arrière (2a, 2b) de construction identique sont prévus.
